# EUROPEAN PATENT APPLICATION

(11) **EP 1 703 726 A1**
(43) Date of publication of application: **20.09.2006**
(21) Application number: 05809658.7
(22) Date of filing: 28.11.2005
(51) Int. Cl.: H04N 5/44, H04N 7/173, H04B 1/16

(54) **DIGITAL BROADCAST RECEIVING APPARATUS**

(30) Priority: 29.11.2004 JP 2004344732
(71) Applicant: MATSUSHITA ELECTRIC INDUSTRIAL CO., LTD., Osaka 571-8501 (JP)
(72) Inventor: NISHI, Tatsuya c/o Matsushita El. Ind. Co., Ltd., Chuo-ku, Osaka-shi, Osaka 540-6319 (JP); KOSUGI, Masahiro c/o Matsushita El. Ind. Co., Ltd., Chuo-ku, Osaka-shi, Osaka 540-6319 (JP); NAITOU, Koubun c/o Matsushita El. Ind. Co., Ltd., Chuo-ku, Osaka-shi, Osaka 540-6319 (JP); NAKAMURA, Tomoharu c/o Matsushita El. Ind. Co, Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/021797
(87) International publication number: WO 2006/057386

(57) **Abstract**

A digital broadcast receiving apparatus is disclosed that performs channel list switching without increasing the apparatus scale and power consumption. In this apparatus, schedule control section (125) acquires the current time from time information acquisition section (105), and reads channel list identification information corresponding to the current time stored in schedule storage section (108), and overall control section (121) reads a channel list stored in channel list storage section (107) in accordance with the channel list identification information read by schedule control section (125), and sets the read channel list as "current." Frequency channel selection section (122) performs channel selection using the frequency channel indicated by the last channel of the channel list set as current, and service channel selection section (124) performs channel selection of the service channel indicated by the last channel.

## Description

### Technical Field

The present invention relates to a digital broadcast receiving apparatus, and more particularly to a digital broadcast receiving apparatus that performs channel list switching.

### Background Art

Small portable terminals such as mobile phones enabling TV viewing and recording are becoming increasingly popular, and if a user can receive TV waves while moving, or at the user' s destination, it is possible to view and record TV broadcasts without restrictions as to location.

In terrestrial digital broadcasting, it is planned to provide a data broadcasting service to such small portable terminals by allocating one of 13 divisions of a channel band (6 MHz) (one segment). This data broadcasting service is called partial reception broadcasting. The amount of information transmitted in one segment is extremely small, and program information and so forth for only ten programs at the most can be included. PSI (Program Specific Information) and SI (Service Information) are known as program information. PSI is information necessary for selecting a desired program, while SI comprises various kinds of stipulated information relating EPG (Electronic Program Guide) such as program names, broadcasting station names, and so forth for making program selection more convenient. SI also includes broadcasting station identifiers assigned to national broadcasting stations, affiliate information showing key stations to which broadcasting stations belong, and so forth.

Also, in terrestrial digital broadcasting, when a broadcasting station multiplexes a plurality of data comprising video, audio, and other program information into a single stream, the MPEG protocol MPEG-2 TS (Transport Stream) is used, the multiplexed stream is demultiplexed on the receiving side, and the data prior to multiplexing is obtained. When "TS" alone is referred to below in this Description, this means all partial reception broadcasting data sent by a broadcasting station.

As a plurality of data can be multiplexed in digital broadcasting in this way, unlike analog broadcasting, a plurality of channels can be operated in one frequency band. To avoid confusion and erroneous use, the concept of a channel as used in this Description will be defined here. Channels include physical channels and logical channels, with physical channels also being used in analog broadcasting. A physical channel is a physical frequency assignment channel (hereinafter referred to as "frequency channel"). In terrestrial digital broadcasting, frequency channels from ch13 to ch62 are assigned. A logical channel identifies a plurality of program schemes (hereinafter referred to as "services") within a frequency channel, and is called a service channel. Such frequency channels and service channels are referred to as channels generically.

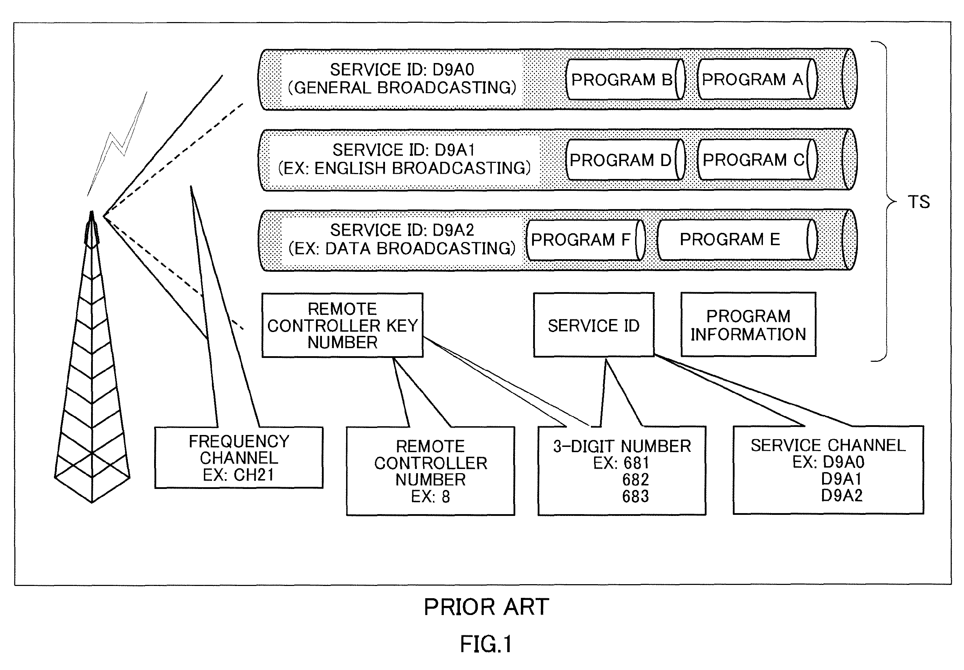

The above-described frequency channels are assigned one-touch button numbers on a remote controller or the like for easy identification, these numbers being called remote controller numbers. The remote controller number of a broadcasting station being received can be obtained by means of PSI information. When channel selection (tuning) is performed by means of a remote controller number, a main service called "primary service" is selected from among a plurality of service channels included in one frequency channel. A number that is calculated from this remote controller number and the service channel value, whereby a user directly specifies a service within a frequency channel, is called a 3-digit number. Remote controller numbers can be changed by means of user settings, in which case changed remote controller numbers are called remote controller key numbers, and the order of channel selection by means of remote controller key numbers is the same as the order of channel selection by means of remote controller numbers. For reference, channel definitions are shown conceptually in FIG.1. In FIG.1, TS is composed of three services and program information such as PSI information and SI information, service ID: D9A0 (primary service) performs general broadcasting, service ID: D9A1 performs English broadcasting, and service ID: D9A2 performs data broadcasting, and programs A through F are broadcast. An example is shown in which the frequency channel is ch21, the remote controller number is 8, the 3-digit numbers are 681, 682, and 683, and the service IDs are D9A0, D9A1, and D9A2.

With a portable terminal that allows viewing of such TV broadcasting, if the terminal moves outside a broadcast area, TV broadcasting cannot be viewed unless the terminal has a channel list corresponding to the broadcast area to which the terminal moves.

Thus, the invention disclosed in Patent Literature 1 was devised. FIG.2 is block diagram showing the configuration of a digital broadcast receiving apparatus described in Patent Literature 1. In this drawing, by continuing viewing using a first receiving apparatus 30 that receives terrestrial digital TV broadcasting while performing a channel search using a second receiving apparatus 31 that receives terrestrial digital radio broadcasting, a channel list for the present point in time is created, and when the broadcast area changes, the created channel list is changed and TV broadcasting can be viewed.
Patent Literature 1: Unexamined Japanese Patent Publication No.2004-64590

### Disclosure of Invention

### Problems to be Solved by the Invention

However, the digital broadcast receiving apparatus described in above Patent Literature 1 is equipped with two receiving apparatuses, and therefore, the apparatus scale and power consumption are increased.

It is an object of the present invention to provide a digital broadcast receiving apparatus that performs channel list switching without increasing the apparatus scale and power consumption.

### Means for Solving the Problems

A digital broadcast receiving apparatus of the present invention has a configuration that includes: a storage section that stores a plurality of time-associated channel lists corresponding to a plurality of different broadcast areas; a time information acquisition section that acquires current time information; and a channel list control section that uses a channel list to which the current time acquired by the aforementioned time information acquisition section and the time stored in the aforementioned storage section correspond as a currently usable channel list.

According to this configuration, if a digital broadcast receiving apparatus stores in advance scheduled times at which the digital broadcast receiving apparatus leaves broadcast areas due to movement, associated with channel lists, the channel control section can use a channel list corresponding to the broadcast area moved to by using a channel list corresponding to the current time as a currently usable channel list.

### Effects of the Invention

According to the present invention, by associating times with a plurality of channel lists corresponding to a plurality of different broadcast areas, and using the channel list corresponding to the current time as the currently usable channel list, a digital broadcast receiving apparatus can be provided that performs channel list switching without increasing the apparatus scale and power consumption.

### Brief Description of Drawings

FIG.1 is a diagram showing channel definitions conceptually;

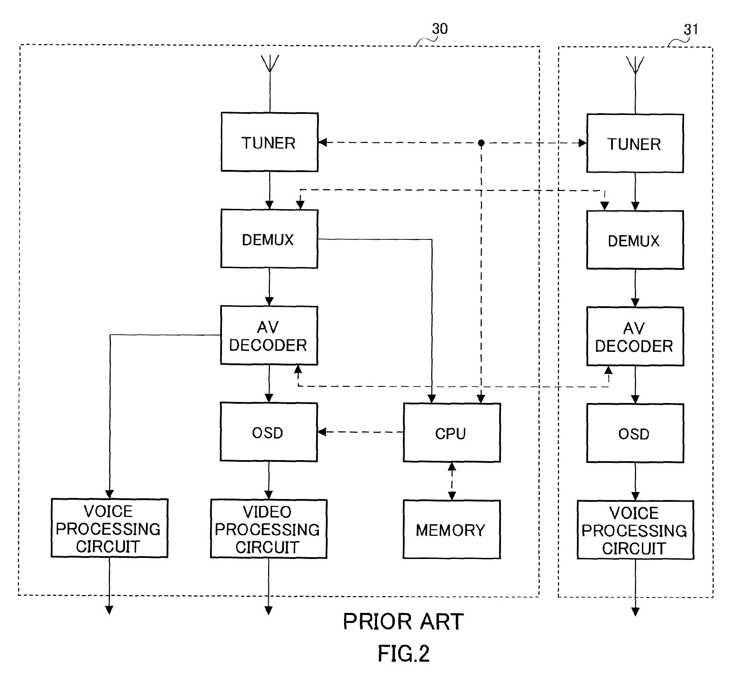

FIG.2 is a block diagram showing the configuration of a digital broadcast receiving apparatus described in Patent Literature 1;
FIG.3 is a block diagram showing the configuration of a digital broadcast receiving apparatus according to Embodiment 1 of the present invention;
FIG.4 is a drawing showing channel lists held by the channel list storage section shown in FIG.3;
FIG.5 is a drawing showing schedule information held by the schedule storage section shown in FIG.3;
FIG.6 is a block diagram showing the internal configuration of the control section shown in FIG.3;
FIG. 7 is a flowchart showing the series of operations from start to end of the digital broadcast receiving apparatus shown in FIG.3;
FIG.8 is a flowchart showing the procedure of the channel selection processing shown in FIG.7;
FIG.9 is a flowchart showing the procedure of the channel list determination processing shown in FIG.8;
FIG.10 is a flowchart showing the procedure of the processing for channel list switching during TV playback shown in FIG.7;
FIG.11 is a flowchart showing the procedure of the processing for channel selection in the event of a TV playback abnormality shown in FIG.7; and
FIG.12 is a flowchart showing the procedure of the automatic schedule amendment processing shown in FIG.7.

### Best Modes for Carrying Out the Invention

An embodiment of the present invention will now be described in detail with reference to the accompanying drawings.

### (Embodiment 1)

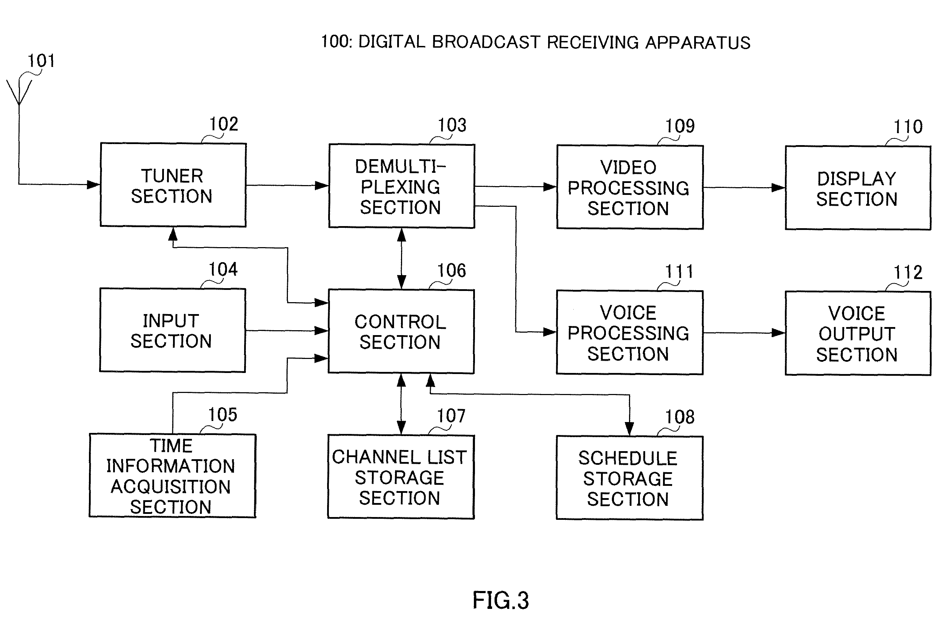

As shown in FIG.3, in a digital broadcast receiving apparatus 100 according to Embodiment 1 of the present invention, tuner section 102 extracts a frequency signal of a channel specified by a user from a broadcast wave received via antenna 101, and performs code demodulation processing on the extracted frequency signal. A signal that has undergone demodulation processing is output to demultiplexing section 103 and control section 106.

Demultiplexing section 103 separates the signal output from tuner section 102 into video information, voice information, program information, and so forth, and outputs video information to video processing section 109, voice information to voice processing section 111, and program information and so forth to control section 106.

An input section 104 comprises button keys and so forth, by means of which the user inputs preselection information such as channel and program information to control section 106. Time information acquisition section 105 determines the current time, and reports the determined current time to control section 106.

Control section 106 performs TV playback, channel selection, and so forth by controlling the various sections inside digital broadcast receiving apparatus 100.

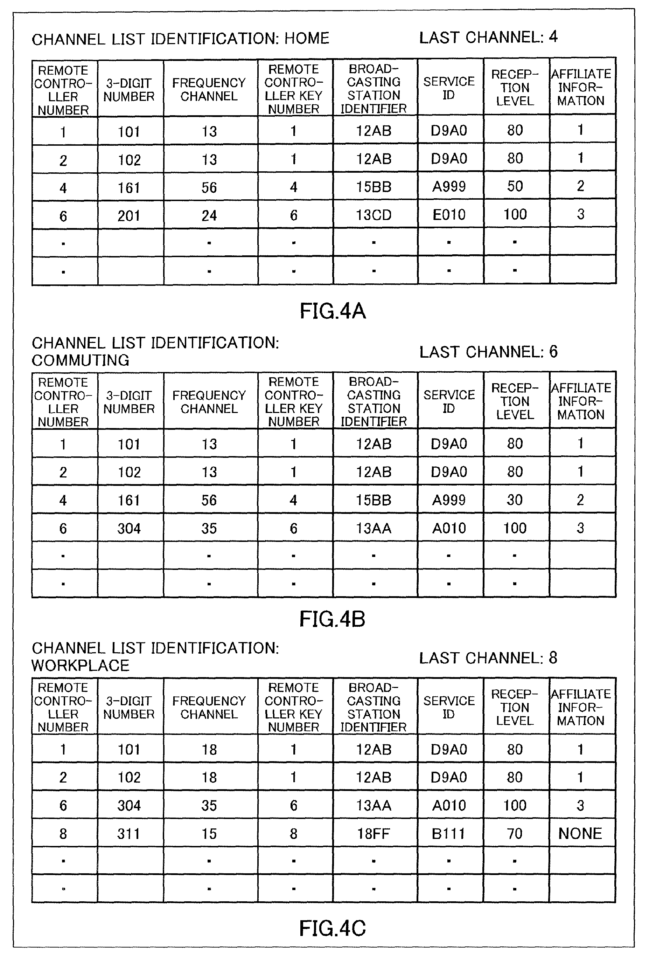

Channel list storage section 107 is nonvolatile memory that detects a receivable broadcast wave, and by means of a channel search coordinated with remote controller numbers, stores information on broadcasting stations that can be received at the time of the search as a receive channel list. As shown in FIG.4, channel list storage section 107 has a plurality of channel lists for different broadcast areas, and items listed in each channel list include remote controller number, 3-digit number, frequency channel, remote controller key number, broadcasting station identifier, service ID, reception level, and affiliate information. FIG.4A shows a channel list corresponding to a broadcast area that includes the user's home, FIG.4B shows a channel list corresponding to a broadcast area that includes the user's commuting route, and FIG.4C shows a channel list corresponding to a broadcast area that includes the user's workplace. The reception level shown in FIG.4 is a value indicating reception sensitivity calculated using reception sensitivity parameters such as received field strength, carrier-to-noise ratio, and bit error rate. Here, an example is shown in which the reception level is indicated by a value from 0 to 100. In this way, home, commuting, workplace, and suchlike channel list identification information is provided in each channel list. When a particular channel list is set to "current" as the currently usable channel list, the channel last selected (hereinafter referred to as "last channel") is stored for each channel list.

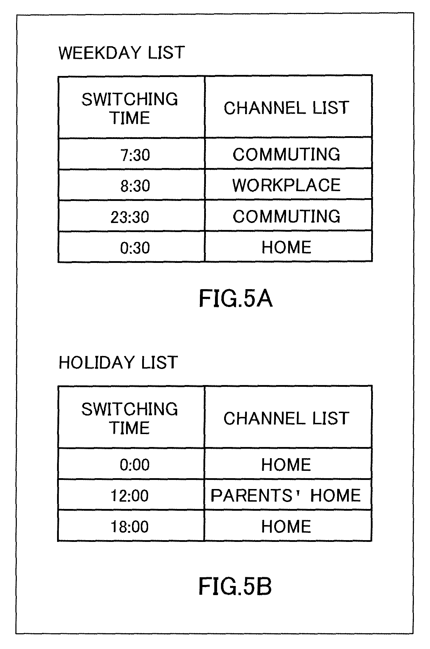

Schedule storage section 108 is nonvolatile memory that stores information in which times for setting channel lists stored in channel list storage section 107 as current (switching times) are scheduled. As shown in FIG.5, in schedule storage section 108 switching times are associated with channel list identification information. FIG. 5A shows weekday schedule information, and FIG.5B shows holiday schedule information. In this way, channel lists are stored in response to a user's regular and periodical movement schedules. Channel list storage section 107 and schedule storage section 108 function as storage facilities.

Video processing section 109 decodes a video stream coded by means of a video compression scheme such as H.264, output from demultiplexing section 103, and outputs the decoded signal to display section 110. Display section 110 displays the video output from video processing section 109.

Voice processing section 111 decodes a voice stream coded by means of a voice compression scheme such as AAC (Advanced Audio Coding), output from demultiplexing section 103, and outputs the decoded signal to a voice output section 112. Voice output section 112 outputs the voice output from voice processing section 111.

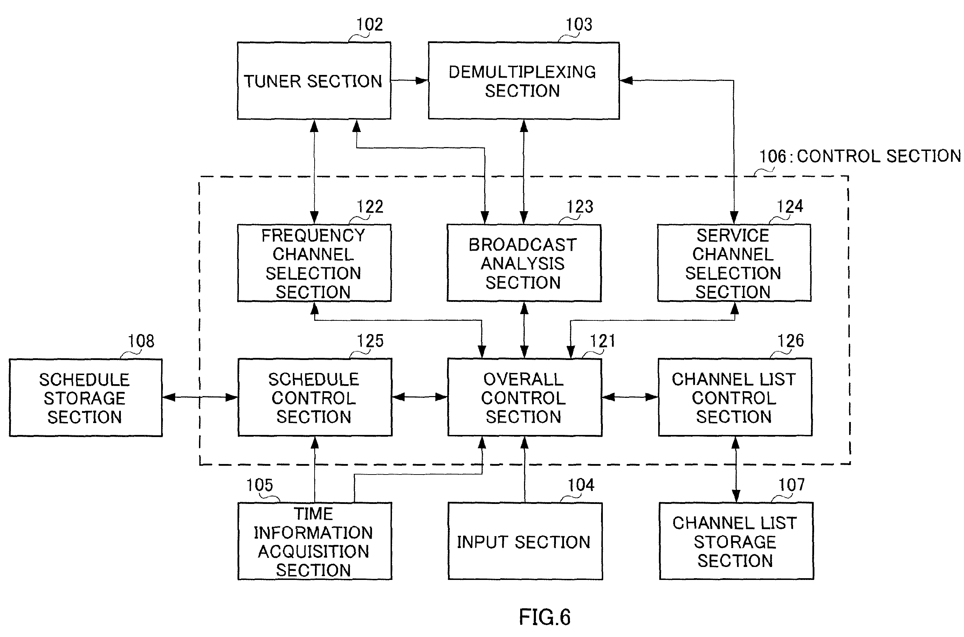

The internal configuration of control section 106 will now be described using FIG.6. In this figure, when a remote controller number or 3-digit number is input from input section 104, overall control section 121 acquires the current time from time information acquisition section 105, sets the channel list corresponding to the current time as current by controlling schedule control section 125 and channel list control section 126, and starts channel selection by controlling frequency channel selection section 122, broadcast analysis section 123, and service channel selection section 124. If a channel list switching time is reached during channel selection on a certain channel, a switching notification is received from schedule control section 125 described later herein, and it is determined whether the channel list is actually to be switched. Also, if an abnormality such as an area becoming out of range occurs, control is performed to switch the channel list, and channel selection is started.

Frequency channel selection section 122 receives a directive from overall control section 121 and sets a frequency channel in tuner section 102, and if there is a receivable broadcast wave (TS) in the set frequency channel, determines frequency channel selection to have succeeded, and outputs the TS directly from tuner section 102 to demultiplexing section 103. If there is no receivable broadcast wave (TS), frequency channel selection is determined to have failed, and frequency channel selection section 122 reports this fact to overall control section 121.

Broadcast analysis section 123 receives a directive from overall control section 121, and performs demultiplexing section 103 setting and analysis of data separated by demultiplexing section 103. The broadcasting station information, TS service configuration, and so forth, obtained through this analysis are reported to overall control section 121. Broadcast analysis section 123 also monitors the status of tuner section 102, and if the digital broadcast receiving apparatus moves out of range, reports this fact to overall control section 121.

Service channel selection section 124 receives a directive from overall control section 121, sets demultiplexing section 103 so as to extract video, voice, and suchlike streams of the indicated service within the TS, and also makes a setting for the extracted streams to be output to video processing section 109 and voice processing section 111.

Schedule control section 125 receives a directive from overall control section 121, and manages schedule information of schedule storage section 108. Schedule control section 125 also acquires the current time from time information acquisition section 105, checks whether or not a channel list switching time has been reached, and if there is a channel list corresponding to the switching time, reports this fact to overall control section 121.

Channel list control section 126 performs read control and write control for channel list storage section 107. For example, channel list control section 126 switches the channel list set as current among the plurality of channel lists stored in channel list storage section 107, and performs channel list updating and last channel management.

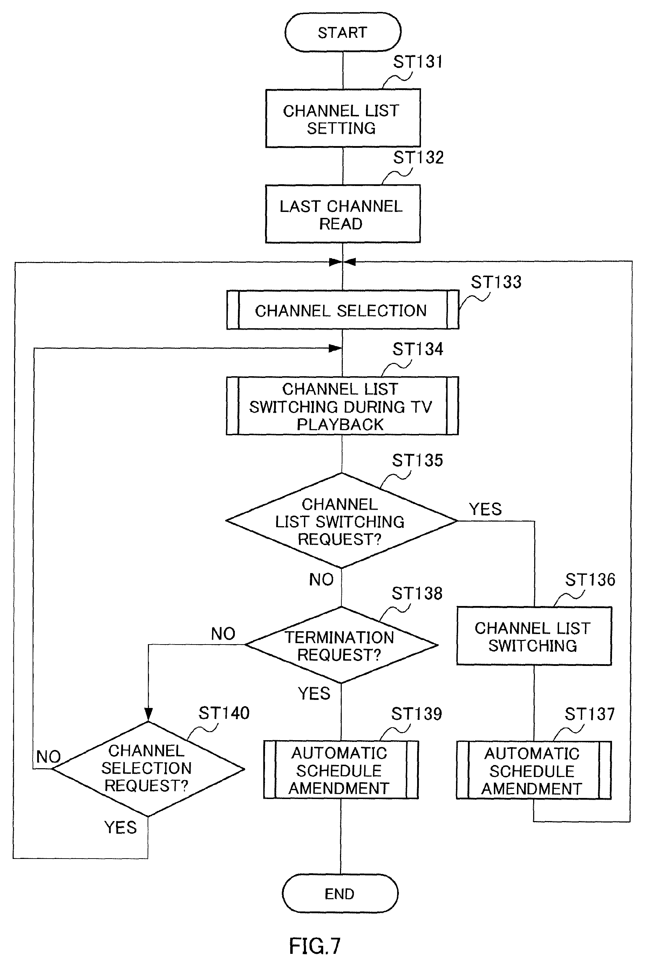

The series of operations from start to end of digital broadcast receiving apparatus 100 with the above configuration will now be described using FIG.7. Referring to FIG.7, in step (hereinafter abbreviated to "ST") 131 schedule control section 125 acquires the current time from time information acquisition section 105, reads channel list identification information corresponding to the current time from schedule storage section 108, and reports the read channel identification information to channel list control section 126 via overall control section 121. Channel list control section 126 reads a channel list from channel list storage section 107 in accordance with the reported channel list identification information, and outputs the read channel list to overall control section 121. Overall control section 121 sets the channel list output from channel list control section 126 as current.

In ST132, overall control section 121 acquires the last channel from the channel list set as current, and in ST133, frequency channel selection section 122 performs channel selection using the frequency channel indicated by the last channel, and service channel selection section 124 performs channel selection using the service channel indicated by the last channel. Details of channel selection processing will be described later herein.

In ST134, a channel list switching time is reached during TV playback on the channel selected in ST133, and channel list switching is performed. Details of processing for channel list switching during TV playback will be described later herein.

In ST135, overall control section 121 checks for the presence of a channel list switching request. If there is a switching request (YES), the processing flow proceeds to ST136, and if there is no switching request (NO), the processing flow proceeds to ST138. A channel list switching request may be performed by the user via input section 104, for example.

In ST136, overall control section 121 switches the channel list by setting the channel list indicated in the channel list switching request as current, and in ST137, overall control section 121 reports switched channel list identification information and the time at which the channel list was switched to schedule control section 125, schedule control section 125 stores the reported channel list identification information and switching time in schedule storage section 108, and the processing flow returns to ST133. The processing in ST137, called automatic schedule amendment processing, will be described in detail later herein.

In ST138, it is determined whether or not there is a digital broadcast receiving apparatus 100 termination request from the user or the like. If it is determined that there is a termination request (YES), the processing flow proceeds to ST139, and if it is determined that there is no termination request (NO), the processing flow proceeds to ST140.

In ST139, the termination request in ST138 is received, and the relevant schedule information is deleted by performing automatic schedule amendment processing in the same way as in ST137. When terminating digital broadcast receiving apparatus 100, if the relevant schedule information is not deleted, schedule information that should be deleted remains stored, and therefore this can be avoided.

In ST140, it is determined whether or not there is a channel selection request from the user or the like. If it is determined that there is a channel selection request (YES), the processing flow returns to ST133, and if it is determined that there is no channel selection request (NO), the processing flow returns to ST134.

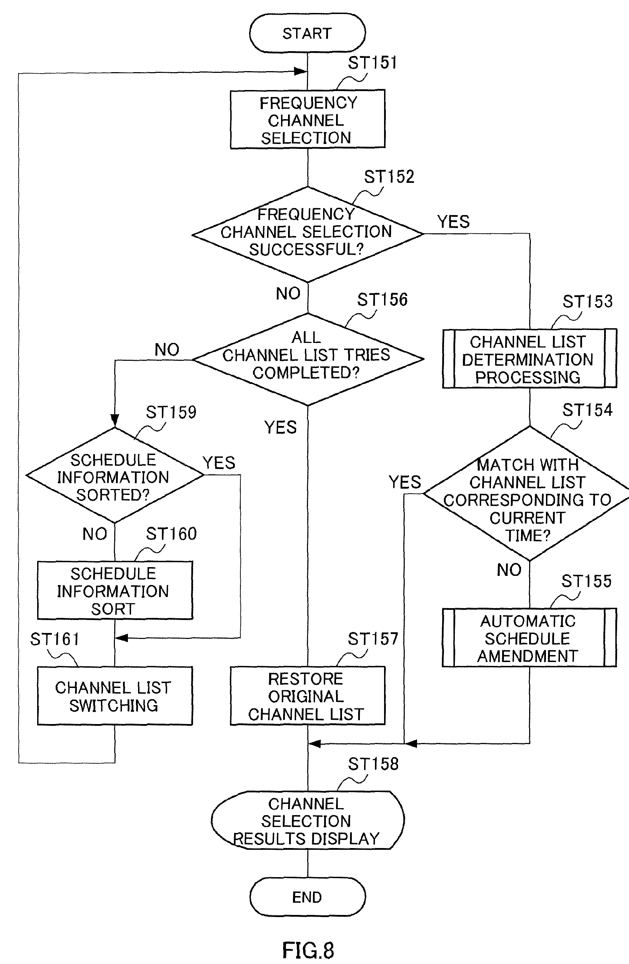

The detailed procedure of the channel selection processing in ST133 in FIG.7 will now be described using FIG.8. Referring to FIG.8, in ST151, frequency channel selection section 122 sets tuner section 102 to the frequency channel specified by overall control section 121, and tries to receive broadcast wave (TS).

In ST152, it is determined by overall control section 121 whether or not the frequency channel selection in ST151 was successful. If the frequency channel selection is determined to have succeeded (YES), the processing flow proceeds to ST153, and if the frequency channel selection is determined to have failed (NO), the processing flow proceeds to ST156.

In ST153, the broadcast wave (TS) obtained by frequency channel selection in ST151 is analyzed, and it is confirmed whether or not the broadcasting station and channel indicated by the result of the analysis match the channel list set as current. If they do not match, a matching channel list is switched to, or a new channel list not stored in channel list storage section 107 is created, and the newly created channel list is switched to, and the processing flow proceeds to ST154. The processing in ST153, called channel list determination processing, will be described in detail later herein.

In ST154, it is determined by overall control section 121 whether or not the channel list set as current by the channel list determination processing in ST153 matches the channel list corresponding to the current time. If it is determined that they match (YES), the processing flow proceeds to ST158, and if it is determined that they do not match (NO), the processing flow proceeds to ST155.

In ST155, the automatic schedule amendment processing in ST137 shown in FIG.7 is performed, and the processing flow proceeds to ST158.

In ST156, it is determined by overall control section 121 whether or not frequency channel selection has been performed for all the channel lists stored in channel list storage section 107. If it is determined that frequency channel selection has been performed (YES), the processing flow proceeds to ST157, and if it is determined that frequency channel selection has not been performed (NO), the processing flow proceeds to ST159.

In ST157, overall control section 121 sets the channel list at the time of the start of channel selection processing as current, that is, restores the original channel list, and in ST158, displays the channel selection result on display section 110. If the channel list has been switched, this fact is indicated.

In ST159, it is determinedwhether or not schedule control section 125 has sorted the schedule information stored in schedule storage section 108 in order of proximity to the current time. If the information is determined to have been thus sorted (YES), the processing flow proceeds to ST161, and if the information is determined not to have been thus sorted (NO), the processing flow proceeds to ST160.

In ST160, schedule control section 125 sorts the schedule information stored in schedule storage section 108 in order of proximity to the current time.

In ST161, channel list switching is performed in the order of sorting in ST160 -that is, in order of proximity to the current time - and the processing flow returns to ST151.

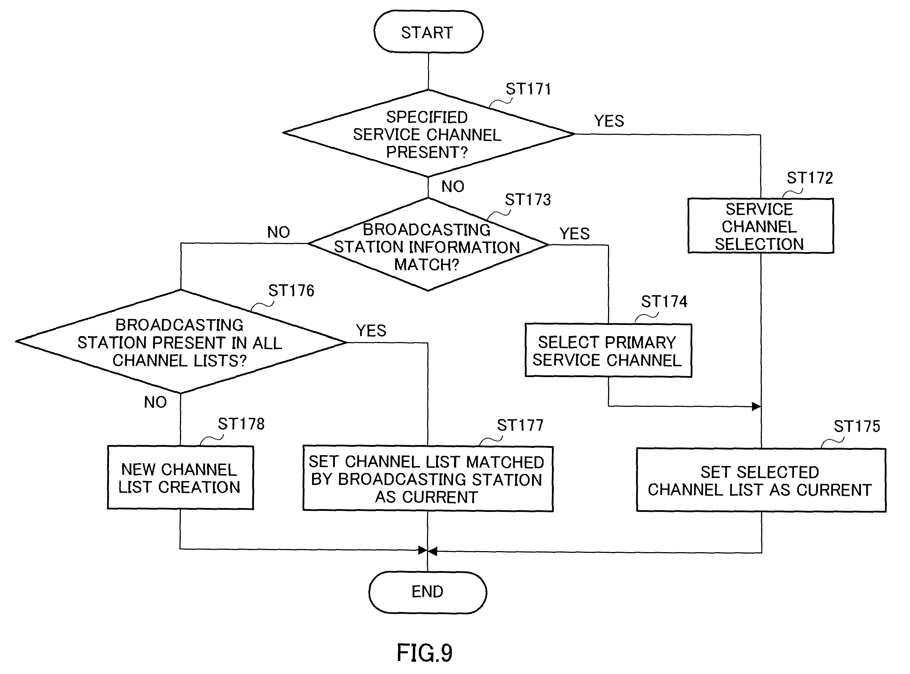

The detailed procedure of the channel list determination processing in ST153 in FIG.8 will now be described using FIG.9. Referring to FIG.9, in ST171 the success of frequency channel selection in ST152 in FIG.8 is identified, and the PSI/SI section contained in the frequency channel broadcast wave (TS) is analyzed by broadcast analysis section 123. Specifically, the service list descriptor of the NIT (Network Information Table) containing the TS service configuration, partial reception descriptor of the NIT containing the partial service ID (service channel) in the TS, PMT (Program Map Table) containing the configuration of one service, and so forth, are analyzed. By this means, it is determined whether or not a service corresponding to a 3-digit number input from input section 104 is included in the TS. If it is determined that the service channel is included (YES), the processing flow proceeds to ST172, and if it is determined that the service channel is not included (NO), the processing flow proceeds to ST173.

In ST172, a service channel corresponding to the 3-digit number input from input section 104 is selected, and service channel selection section 124 sets demultiplexing section 103 so that video provided by the specified service in the TS is output to video processing section 109, and voice to voice processing section 111, and the processing flow proceeds to ST175.

In ST173, it is determined by overall control section 121 whether or not broadcasting station information corresponding to the selected frequency channel, and broadcasting station information of section data contained in the broadcast wave of the selected channel (hereinafter referred to simply as "received broadcasting station information"), match in a channel list stored in channel list storage section 107. Specifically, broadcasting station identification information contained in a BIT (Broadcaster Information Table), network identification information contained in each PSI/SI, TS identification information, and so forth, are analyzed. If it is determined that there is a match (YES), the processing flow proceeds to ST174, and if it is determined that there is no match (NO), the processing flow proceeds to ST176.

In ST174, service channel selection section 124 selects a primary service channel, sets demultiplexing section 103 so that video provided by the primary service in the TS is output to video processing section 109, and voice to voice processing section 111, and the processing flow proceeds to ST175.

In ST175, if the channel list containing the selected service channel has not been set as current, channel list control section 126 sets the relevant channel list as current, and terminates channel list determination processing. By this means, the convenience of a channel list corresponding to the broadcast area in which a user is located can be improved.

In ST176, overall control section 121 searches all channel lists stored in channel list storage section 107 via channel list control section 126, and determines whether or not broadcasting station information matching the received broadcasting station information is present. If it is determined that such information is present (YES), the processing flow proceeds to ST177, and if it is determined that such information is not present (NO), the processing flow proceeds to ST178.

In ST177, channel list control section 126 sets the channel list containing broadcasting station information that matches the received broadcasting station information as current, and terminates channel list determination processing.

In ST178, overall control section 121 indicates on display section 110 the fact that this is a broadcast area different from broadcast areas corresponding to the plurality of channel lists stored in channel list storage section 107, and makes a request to the user to create a new channel list. Alternatively, a new channel list is created, and the selected channel is entered as a receivable channel. If a channel search has already been performed during switchover channel selection, the search results are taken as a new channel list. Then channel list determination processing is terminated. By this means, a new channel list corresponding to the broadcast area at the current location is acquired, and for any broadcast area, a channel list corresponding to that broadcast area can be acquired.

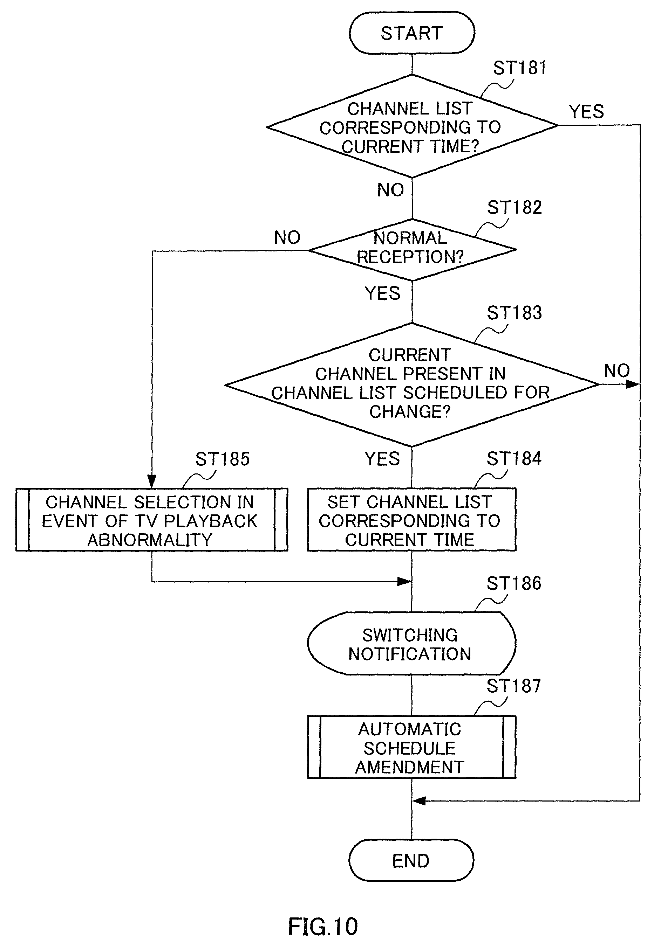

The detailed procedure of the processing for channel list switching during TV playback in ST134 shown in FIG.7 will now be described using FIG.10. Referring to FIG. 10, in ST181 overall control section 121 determines whether or not the channel list set as current is a channel list corresponding to the current time. If it is determined that the channel list corresponds to the current time (YES), processing for channel list switching during TV playback is terminated, and if it is determined that the channel list does not correspond to the current time (NO), the processing flow proceeds to ST182.

In ST182, it is determined whether a broadcast wave is being received normally and video and voice are being played back. If it is determined that a broadcast wave is being received normally (YES), the processing flow proceeds to ST183.
If, on the other hand, it is determined that a broadcast wave is not being received normally -that is to say, reception is abnormal -(NO), such as when the reception status is poor, video or voice underflow occurs, or playback stops, the processing flow proceeds to ST185. As it is not possible to determine whether the reason why a broadcast wave cannot be received normally is simply that the apparatus is out of range, or that the broadcast area has changed, the channel list is not switchedblindly. Therefore, either a channel selection operation is performed, or channel list switching is not performed until a channel list switching time is reached.

In ST183, it is confirmed whether or not the channels (frequency channel and service channel) for which TV playback is currently in progress are included in the channel list scheduled after the channel list currently set as current. If they are included (YES), the processing flow proceeds to ST184, and if they are not included (NO), processing for channel list switching during TV playback is terminated.

In ST184, a switch is made to the channel list corresponding to the current time. At this time, a channel selection operation is not performed and TV playback is continued, and the processing flow proceeds to ST186. That is to say, channel list switching is performed while continuing TV playback. By this means, even if a channel list switching time is reached, if a channel included in the pre-switchover channel list is being received normally and TV playback is being performed, discontinuation of TV playback due to channel list switching and channel selection can be avoided.

In ST185, channel list switching processing is performed, and it is determined whether or not the channel list switched to is correct, and whether it is a channel list of a different broadcast area. This processing in ST185 is called processing for channel selection in the event of a TV playback abnormality, will be described in detail later herein.

In ST186, the user is notified of the fact that the channel list has been switched, and in ST187, the automatic schedule amendment processing in ST137 shown in FIG.7 is performed, and processing for channel list switching during TV playback is terminated.

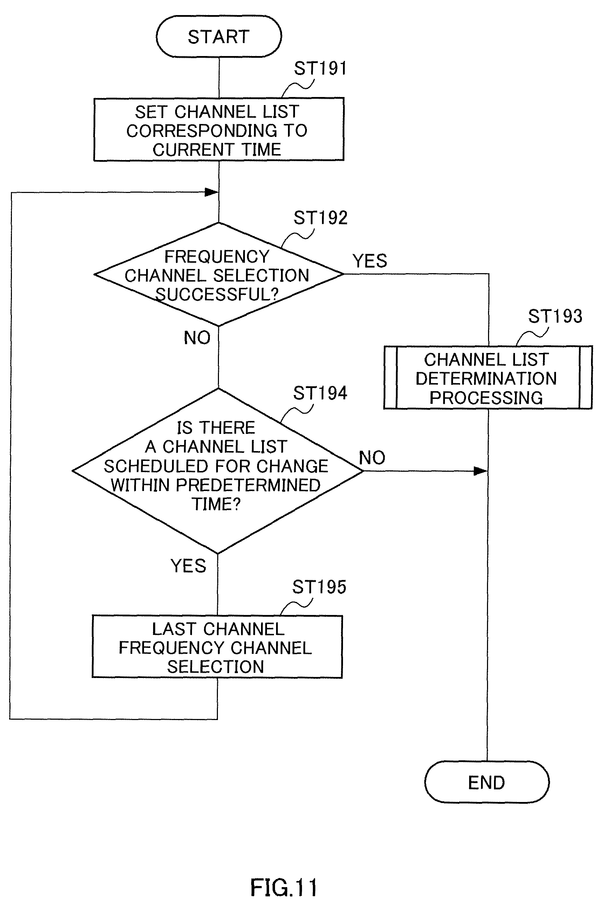

The detailed procedure of the processing for channel selection in the event of a TV playback abnormality in ST185 shown in FIG. 10 will now be described using FIG. 11. Referring to FIG.11, in ST191 the channel list corresponding to the current time is set, and in ST192, frequency channel selection is performed, and it is determined by overall control section 121 whether or not frequency channel selection has succeeded.
If it is determined that frequency channel selection has succeeded (YES), the processing flow proceeds to ST193, and if it is determined that frequency channel selection has failed (NO), the processing flow proceeds to ST194.

In ST193, the channel list determination processing shown in FIG.9 is performed, and processing for channel selection in the event of a TV playback abnormality is terminated.

In ST194, it is determined whether or not the channel list scheduled after the channel list currently set as current will reach a switching time within a predetermined time- for example, within 30 minutes- from the current time. If it is determined that a switching time will be reached within a predetermined time from the current time (YES), the processing flow proceeds to ST195, and if it is determined that a switching time will not be reached (NO), processing for channel selection in the event of a TV playback abnormality is terminated.

In ST195, a switch is made to the channel list scheduled after the channel list currently set as current, frequency channel selection is performed using the last channel of the channel list switched to, and the processing flow returns to ST192.

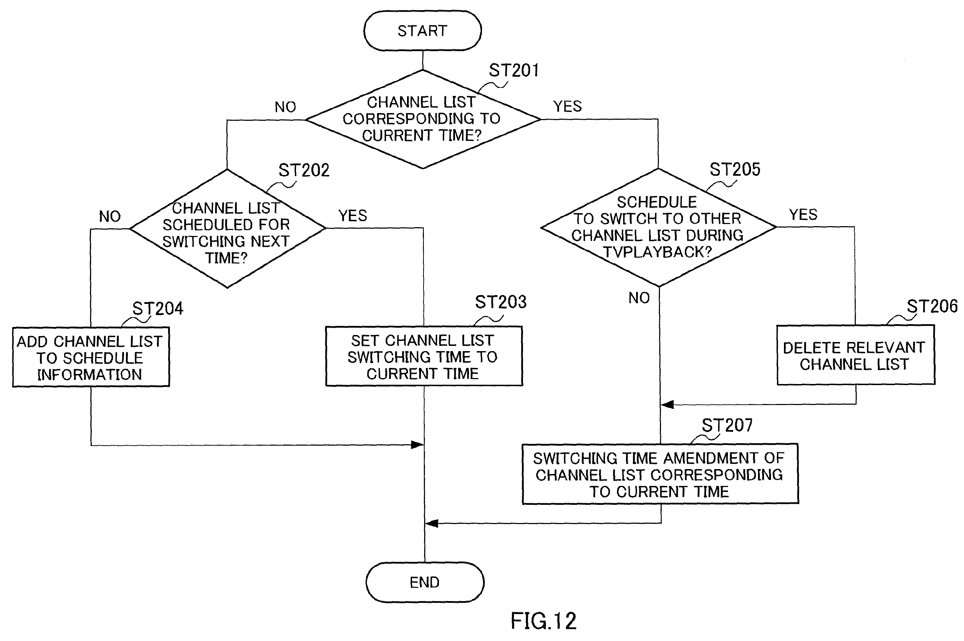

The detailed procedure of automatic schedule amendment processing in ST137 shown in FIG.7 will now be described using FIG.12. Referring to FIG.12, in ST201 it is determined whether or not the channel list currently set as current is a channel list corresponding to the current time by referencing schedule information stored in schedule storage section 108. If it is determined that the channel list corresponds to the current time (YES), the processing flow proceeds to ST205, and if it is determined that the channel list does not correspond to the current time (NO), the processing flow proceeds to ST202.

In ST202, it is determined whether or not the channel list currently set as current is the channel list scheduled after the channel list corresponding to the current time. If it is determined that the channel list currently set as current is the channel list scheduled next (YES), the processing flow proceeds to ST203, and if it is determined that the channel list currently set as current is not the channel list scheduled next (NO), the processing flow proceeds to ST204.

In ST203, the switching time of the channel list scheduled after the channel list corresponding to the current time-that is, the channel list currently set as current- is changed to the current time, and automatic schedule amendment processing is terminated. Here, the digital broadcast receiving apparatus is assumed to have moved to the next broadcast area prior to the switching time, and processing is performed to advance the channel list switching time.

In ST204, the time at which the channel list currently set as current was set as current is made the switching time, this channel list is added to the schedule information, and automatic schedule amendment processing is terminated.

In ST205, it is determined whether or not the channel list added in ST204 in the previous automatic schedule amendment processing was used during TV playback. That is to say, it is determined whether or not there is a schedule to switch to a channel list other than the added channel list.
Here, if the added channel list was not used during TV playback, it is determined that there is a schedule to switch to another channel list (YES), and the processing flow proceeds to ST206, and if the added channel list was used during TV playback, it is determined that there is no schedule to switch to another channel list (NO), and the processing flow proceeds to ST207.

In ST206, since the added channel list has not been used in ST204 of the previous automatic schedule amendment processing, this channel list is deleted, and the processing flow proceeds to ST207.

In ST207, the switching time of the channel list corresponding to the current time is changed to the time at which this channel list was actually switched to, and automatic schedule amendment processing is terminated.

By performing automatic schedule amendment processing in this way, if the user takes an action that departs from schedule information, the schedule information can be amended flexibly without an input operation or input directive by the user.

Thus, according to this embodiment, times are associated in advance with channel lists of a plurality of different broadcast areas, and when an associated time arrives the corresponding channel list is set as the current channel list, so that by associating in advance times at which broadcast areas change due to user movement with channel lists, a switch is made to the channel list of the broadcast area moved to at the time at which a broadcast area is left, enabling channel selection to be performed with a channel list corresponding to the location moved to.

A first aspect of the present invention is a digital broadcast receiving apparatus that includes: a storage section that stores a plurality of time-associated channel lists corresponding to a plurality of different broadcast areas; a time information acquisition section that acquires current time information; and a channel list control section that uses a channel list to which the current time acquired by the aforementioned time information acquisition section and the time stored in the aforementioned storage section correspond as a currently usable channel list.

According to this configuration, if a digital broadcast receiving apparatus stores in advance scheduled times at which the digital broadcast receiving apparatus leaves broadcast areas due to movement, associated with channel lists, the channel control section can use a channel list corresponding to the broadcast area moved to by using a channel list corresponding to the current time as a currently usable channel list.

A second aspect of the present invention is a digital broadcast receiving apparatus that includes, in the above aspect, a channel selection section that selects a service channel included in a first channel list used as a currently usable channel list; wherein the aforementioned channel list control section, if, when switching from the aforementioned first channel list to a different second channel list as a currently usable channel list, a service channel selected by the aforementioned channel selection section is included in the aforementioned second channel list, switches the channel list while maintaining channel selection of the service channel selected by the aforementioned channel selection section.

According to this configuration, if a selected service channel for which TV playback, TV recording, or the like is in progress is included in a second channel list, the channel list can be switched while maintaining channel selection.

A third aspect of the present invention is a digital broadcast receiving apparatus wherein, in an above aspect, the aforementioned channel list control section, if a service channel selected by the aforementioned channel selection section is not included in a second channel list different from the aforementioned first channel list, switches the channel list after selection of the service channel selected by the aforementioned channel selection section is discontinued.

According to this configuration, when a selected service channel is not included in a second channel list, TV playback or TV recording can be continued as long as possible, even though a time stored in a storage section arrives, by switching the channel list after service channel selection is discontinued.

A fourth aspect of the present invention is a digital broadcast receiving apparatus wherein, in an above aspect, the aforementioned channel list control section, if selection of a channel included in the aforementioned first channel list by the aforementioned channel selection section fails, or if selection of the service channel selected by the aforementioned channel selection section is discontinued, causes the aforementioned channel selection section to perform channel selection using a channel not included in the aforementioned first channel list, or the channel selected last when the aforementioned second channel list was previously used as currently usable channels, among channels included in the second channel list with which a time close to the current time acquired by the aforementioned time information acquisition section is associated, and switches to the aforementioned second channel list on condition that channel selection succeeds.

According to this configuration, in the event of failure of channel selection using a first channel list, or discontinuation of channel selection using a first channel list, it is probable that the digital broadcast receiving apparatus has left the broadcast area prior to the time stored in the storage section, and therefore the time needed for channel list switching can be shortened by using a second channel list with which a time close to the current time is associated. Also, the possibility of successful channel selection can be improved by performing channel selection using a channel not included in the first channel list, or the channel selected last when the second channel list was previously used as currently usable channels.

A fifth aspect of the present invention is a digital broadcast receiving apparatus wherein, in an above aspect, the aforementioned channel list control section, if a combination of frequency channels for which channel selection by the aforementioned channel selection section was successful is different from any combination of frequency channels in channel lists stored in the aforementioned storage section, acquires a new channel list corresponding to the broadcast area at the current location.

A sixth aspect of the present invention is a digital broadcast receiving apparatus wherein, in an above aspect, the aforementioned channel list control section, if channel selection by the aforementioned channel selection section fails for channels included in all channel lists stored in the aforementioned storage section, causes the aforementioned channel selection section to perform a channel search until channel selection succeeds for a frequency channel, and acquires a new channel list corresponding to the broadcast area at the current location.

According to these configurations, if a combination of frequency channels for which channel selection was successful is different from any combination of frequency channels in channel lists stored in the storage section, it is probable that the digital broadcast receiving apparatus is in an area other than a broadcast area corresponding to a channel list stored in the storage section, and therefore, for any broadcast area, a channel list corresponding to that broadcast area can be used by acquiring a new channel list corresponding to the broadcast area at the current location.

A seventh aspect of the present invention is a digital broadcast receiving apparatus wherein, in an above aspect, the aforementioned channel list control section, if switching from the aforementioned first channel list to the aforementioned second channel list is later than the time associated with the aforementioned second channel list stored in the aforementioned storage section, updates the time associated with the aforementioned second channel list to the time at the time of channel list switching.

According to this configuration, if switching to a second channel list is later than the time associated with the second channel list, by updating the associated time to the time at the time of channel list switching, when a specific broadcast area is moved to periodically, the second channel list can be used with good timing when next used.

An eighth aspect of the present invention is a digital broadcast receiving apparatus wherein, in an above aspect, the aforementioned channel list control section, if switching from the aforementioned first channel list to the aforementioned second channel list is earlier than the time associated with the aforementioned second channel list stored in the aforementioned storage section, updates the time associated with the aforementioned second channel list to the time at the time of channel list switching.

According to this configuration, if switching to a second channel list is earlier than the time associated with the second channel list, by updating the associated time to the time at the time of channel list switching, when a specific broadcast area is moved to periodically, the second channel list can be used with good timing when next used.

A ninth aspect of the present invention is a digital broadcast receiving apparatus wherein, in an above aspect, the aforementioned channel list control section, if switching is performed to a channel list in an order different from times stored in the aforementioned storage section, causes the aforementioned storage section to newly store the channel list switched to, associated with the time at which switching was performed.

According to this configuration, if switching is performed to a channel list in an order different from times stored in the storage section, it is probable that a specific broadcast area left periodically has been changed in accordance with movement of the digital broadcast receiving apparatus, and therefore, by newly storing the channel list switched to, associated with the time at which switching was performed, even though periodic movement to a specific broadcast area has been changed, a channel list corresponding to that broadcast area can be used.

A tenth aspect of the present invention is a digital broadcast receiving apparatus wherein, in an above aspect, the aforementioned channel list control section, if switching is not performed to a channel list with which a time newly stored in the aforementioned storage section is associated, but switching is performed to the next channel list, deletes the channel list that was not switched to from the aforementioned storage section.

According to this configuration, if switching is not performed to a channel list with which a time newly stored in the storage section is associated, but switching is performed to the next channel list, it is probable that the channel list that was not switched to will not be used the next time either, and therefore by deleting that channel list from the storage section, when a specific broadcast area is moved to periodically the channel list corresponding to the broadcast area moved to can be used with good timing.

An eleventh aspect of the present invention is a digital broadcast receiving apparatus wherein, in an above aspect, the aforementioned channel selection section, if a service channel included in the selected aforementioned first channel list is not included in a second channel list different from the aforementioned first channel list, performs channel selection using a channel of an affiliate of the broadcasting station that provides the selected service channel.

According to this configuration, even if a service channel included in a selected first channel list is not included in a second channel list, by performing channel selection using a channel of an affiliate of the broadcasting station that provides the selected service channel, the possibility of continuing TV playback or TV recording in a broadcast area moved to can be improved.

A twelfth aspect of the present invention is a digital broadcast receiving apparatus wherein, in an above aspect, the aforementioned channel selection section, if a service channel included in the selected aforementioned first channel list is not included in a second channel list different from the aforementioned first channel list, performs channel selection using the channel selected last when the second channel list was previously used as currently usable channels.

According to this configuration, even if a service channel included in a selected first channel list is not included in a second channel list, channel selection can be performed using the channel selected last when the second channel list was previously used as currently usable channels.

A thirteenth aspect of the present invention is a digital broadcast receiving apparatus wherein, in an above aspect, the aforementioned channel selection section performs channel selection using a channel that broadcasts the same program as a program selected using a channel included in the aforementioned first channel list, based on program information of broadcasting stations included in a second channel list different from the aforementioned first channel list.

According to this configuration, by performing channel selection using a channel that broadcasts the same program as a program selected using a channel included in a first channel list, based on program information of broadcasting stations included in a second channel list, the possibility of continuing TV playback or TV recording of the same program in a broadcast area moved to can be improved.

The present application is based on Japanese Patent Application No.2004-344732 filed on November 29, 2004, the entire content of which is expressly incorporated herein by reference.

### Industrial Applicability

A digital broadcast receiving apparatus according to the present invention has an effect of performing channel list switching without increasing the apparatus scale and power consumption, and is applicable to portable terminals such as mobile phones.

## Claims

1. A digital broadcast receiving apparatus comprising:
a storage section that stores a plurality of channel lists corresponding to a plurality of different broadcast areas associated with time;
a time information acquisition section that acquires current time information; and
a channel list control section that uses a channel list to which a current time acquired by said time information acquisition section and a time stored in said storage section correspond as a currently usable channel list.

2. The digital broadcast receiving apparatus according to claim 1, further comprising a channel selection section that selects a service channel included in a first channel list used as a currently usable channel list;
wherein said channel list control section, if, when switching from said first channel list to a different second channel list as a currently usable channel list, a service channel selected by said channel selection section is included in said second channel list, switches a channel list while maintaining channel selection of a service channel selected by said channel selection section.

3. The digital broadcast receiving apparatus according to claim 1, wherein said channel list control section, if a service channel selected by said channel selection section is not included in a second channel list different from said first channel list, switches a channel list after selection of a service channel selected by said channel selection section is discontinued.

4. The digital broadcast receiving apparatus according to claim 1, wherein said channel list control section, if selection of a channel included in said first channel list by said channel selection section fails, or if selection of a service channel selected by said channel selection section is discontinued, causes said channel selection section to perform channel selection using a channel not included in said first channel list, or a channel selected last when said second channel list was previously used as currently usable channels, among channels included in a second channel list with which a time close to a current time acquired by said time information acquisition section is associated, and switches to said second channel list on condition that channel selection succeeds.

5. The digital broadcast receiving apparatus according to claim 1, wherein said channel list control section, if a combination of frequency channels for which channel selection by said channel selection section was successful is different from any combination of frequency channels in channel lists stored in said storage section, acquires a new channel list corresponding to a broadcast area at a current location.

6. The digital broadcast receiving apparatus according to claim 1, wherein said channel list control section, if channel selection by said channel selection section fails for channels included in all channel lists stored in said storage section, causes said channel selection section to perform a channel search until channel selection succeeds for a frequency channel, and acquires a new channel list corresponding to a broadcast area at a current location.

7. The digital broadcast receiving apparatus according to claim 3, wherein said channel list control section, if switching from said first channel list to said second channel list is later than a time associated with said second channel list stored in said storage section, updates a time associated with said second channel list to a time at a time of channel list switching.

8. The digital broadcast receiving apparatus according to claim 4, wherein said channel list control section, if switching from said first channel list to said second channel list is earlier than a time associated with said second channel list stored in said storage section, updates a time associated with said second channel list to a time at a time of channel list switching.

9. The digital broadcast receiving apparatus according to claim 1, wherein said channel list control section, if switching is performed to a channel list in an order different from times stored in said storage section, causes said storage section to newly store a channel list switched to, associated with a time at which switching was performed.

10. The digital broadcast receiving apparatus according to claim 9, wherein said channel list control section, if switching is not performed to a channel list with which a time newly stored in said storage section is associated, but switching is performed to a next channel list, deletes a channel list that was not switched to from said storage section.

11. The digital broadcast receiving apparatus according to claim 1, wherein said channel selection section, if a service channel included in selected said first channel list is not included in a second channel list different from said first channel list, performs channel selection using a channel of an affiliate of a broadcasting station that provides a selected service channel.

12. The digital broadcast receiving apparatus according to claim 1, wherein said channel selection section, if a service channel included in selected said first channel list is not included in a second channel list different from said first channel list, performs channel selection using a channel selected last when said second channel list was previously used as currently usable channels.

13. The digital broadcast receiving apparatus according to claim 1, wherein said channel selection section performs channel selection using a channel that broadcasts a same program as a program selected using a channel included in said first channel list, based on program information of broadcasting stations included in a second channel list different from said first channel list.

## Amended claims

### Amended claims under Art. 19.1 PCT

1. A digital broadcast receiving apparatus comprising:
a storage section that stores a plurality of channel lists corresponding to a plurality of different broadcast areas associated with time;
a time information acquisition section that acquires current time information; and
a channel list control section that uses a channel list to which a current time acquired by said time information acquisition section and a time stored in said storage section correspond as a currently usable channel list.

2. The digital broadcast receiving apparatus according to claim 1, further comprising a channel selection section that selects a service channel included in a first channel list used as a currently usable channel list;
wherein said channel list control section, if, when switching from said first channel list to a different second channel list as a currently usable channel list, a service channel selected by said channel selection section is included in said second channel list, switches a channel list while maintaining channel selection of a service channel selected by said channel selection section.

3. (Amended) The digital broadcast receiving apparatus according to claim 1, further comprising a channel selection section that selects a service channel included in a first channel list used as a currently usable channel list;
wherein said channel list control section, if a service channel selected by said channel selection section is not included in a second channel list different from said first channel list, switches a channel list after selection of a service channel selected by said channel selection section is discontinued.

4. (Amended) The digital broadcast receiving apparatus according to claim 1, further comprising a channel selection section that selects a service channel included in a first channel list used as a currently usable channel list;
wherein said channel list control section, if selection of a channel included in said first channel list by said channel selection section fails, or if selection of a service channel selected by said channel selection section is discontinued, causes said channel selection section to perform channel selection using a channel not included in said first channel list, or a channel selected last when said second channel list was previously used as currently usable channels, among channels included in a second channel list with which a time close to a current time acquired by said time information acquisition section is associated, and switches to said second channel list on condition that channel selection succeeds.

5. (Amended) The digital broadcast receiving apparatus according to claim 1, further comprising a channel selection section that selects a service channel included in a first channel list used as a currently usable channel list;
wherein said channel list control section, if a combination of frequency channels for which channel selection by said channel selection section was successful is different from any combination of frequency channels in channel lists stored in said storage section, acquires a new channel list corresponding to a broadcast area at a current location.

6. (Amended) The digital broadcast receiving apparatus according to claim 1, further comprising a channel selection section that selects a service channel included in a first channel list used as a currently usable channel list;
wherein said channel list control section, if channel selection by said channel selection section fails for channels included in all channel lists stored in said storage section, causes said channel selection section to perform a channel search until channel selection succeeds for a frequency channel, and acquires a new channel list corresponding to a broadcast area at a current location.

7. The digital broadcast receiving apparatus according to claim 3, wherein said channel list control section, if switching from said first channel list to said second channel list is later than a time associated with said second channel list stored in said storage section, updates a time associated with said second channel list to a time at a time of channel list switching.

8. The digital broadcast receiving apparatus according to claim 4, wherein said channel list control section, if switching from said first channel list to said second channel list is earlier than a time associated with said second channel list stored in said storage section, updates a time associated with said second channel list to a time at a time of channel list switching.

9. The digital broadcast receiving apparatus according to claim 1, wherein said channel list control section, if switching is performed to a channel list in an order different from times stored in said storage section, causes said storage section to newly store a channel list switched to, associated with a time at which switching was performed.

10. The digital broadcast receiving apparatus according to claim 9, wherein said channel list control section, if switching is not performed to a channel list with which a time newly stored in said storage section is associated, but switching is performed to a next channel list, deletes a channel list that was not switched to from said storage section.

11. (Amended) The digital broadcast receiving apparatus according to claim 1, further comprising a channel selection section that selects a service channel included in a first channel list used as a currently usable channel list;
wherein said channel selection section, if a service channel included in selected said first channel list is not included in a second channel list different from said first channel list, performs channel selection using a channel of an affiliate of a broadcasting station that provides a selected service channel.

12. (Amended) The digital broadcast receiving apparatus according to claim 1, further comprising a channel selection section that selects a service channel included in a first channel list used as a currently usable channel list;
wherein said channel selection section, if a service channel included in selected said first channel list is not included in a second channel list different from said first channel list, performs channel selection using a channel selected last when said second channel list was previously used as currently usable channels.

13. (Amended) The digital broadcast receiving apparatus according to claim 1, further comprising a channel selection section that selects a service channel included in a first channel list used as a currently usable channel list;
wherein said channel selection section performs channel selection using a channel that broadcasts a same program as a program selected using a channel included in said first channel list, based on program information of broadcasting stations included in a second channel list different from said first channel list.

14. (Added) The digital broadcast receiving apparatus according to claim 1, further comprising: a last channel storage section that stores a last channel selected last when previously used as a currently usable channel for each of said plurality of channel lists; and a frequency channel selection section that performs channel selection using a frequency channel indicated by said last channel.
